# FASCICULE DE BREVET EUROPEEN

(11) **EP 1 627 140 B1**
(45) Date de publication et mention de la délivrance du brevet: **28.02.2007**
(21) Numéro de dépôt: 04742677.0
(22) Date de dépôt: 07.05.2004
(51) Int. Cl.: F02D 21/08

(54) **PROCEDE DE PILOTAGE DE BRUIT D'UN MOTEUR THERMIQUE**
VERFAHREN ZUR GERÄUSCHANSTEUERUNG EINER BRENNKRAFTMASCHINE
METHOD OF CONTROLLING HEAT ENGINE NOISE

(30) Priorité: 07.05.2003 FR 0305579
(43) Date de publication de la demande: 22.02.2006
(73) Titulaire: Renault s.a.s., 92100 Boulogne Billancourt (FR)
(72) Inventeur: DUCLOS, Jean-Marc, F-91470 Forges-les-Bains (FR)
(86) Numéro de dépôt international: PCT/FR2004/001119
(87) Numéro de publication internationale: WO 2004/099590

(56) Documents cités:
- EP-A- 1 083 322
- EP-A- 1 221 544
- EP-A- 1 243 777
- FR-A- 2 814 199
- US-A- 6 135 088

## Description

La présente invention concerne, de façon générale, un procédé de répartition d'EGR (gaz brûlés recyclés en externe) appliqué à un moteur thermique à allumage par compression.

Plus particulièrement, l'invention concerne un procédé de pilotage d'un moteur thermique à fonctionnement cyclique tel qu'un moteur diesel à injection directe, comprenant notamment :
- une chambre de combustion,
- des moyens d'injection de carburant dans la chambre,
- des moyens d'admission pour admettre sélectivement dans la chambre un comburant gazeux contenant de l'air sous la forme d'une première veine fluide,
- des moyens d'échappement pour autoriser sélectivement l'échappement de gaz brûlés hors de la chambre et
- des moyens de recyclage incluant un premier moyen de contrôle de débit pour recycler des gaz brûlés dans la première veine fluide selon un premier taux de concentration en gaz brûlés, ce premier moyen de contrôle de débit étant pilotés par un premier signal de contrôle de débit,
- une base de données cartographique.

L'utilisation de gaz dits de recirculation ou EGR ou gaz recyclés dans les chambres de combustion d'un moteur alternatif et plus particulièrement d'un moteur à allumage par compression est bien connue de l'homme du métier. Les gaz recyclés sont des gaz issus de la combustion des cycles précédents et sont donc appauvris en oxygène. Ils sont utilisés, mélangés avec l'air, pour réduire les émissions polluantes ou pour contrôler le déroulement de la combustion. Plus précisément le temps d'allumage d'un mélange air / carburant contenant des gaz recyclés est plus important que celui d'un mélange équivalent n'en contenant pas. Il est donc possible de retarder l'allumage d'un mélange air / carburant en y adjoignant des gaz recyclés jusqu'à une limite maximale de concentration au-delà de laquelle la combustion du carburant sera difficile et incomplète au risque de produire des particules polluantes.

On parle d'EGR externe lorsque l'alimentation en gaz recyclés s'effectue par un circuit localisé hors de la chambre de combustion et d'EGR interne lorsque ces gaz résiduels de la combustion sont restés piégés dans la chambre de combustion. L'invention proposée se rapporte principalement à la gestion de l'EGR externe et au procédé de contrôle de l'admission de gaz recyclés admis dans la chambre pour réduire le bruit du moteur.

Le bruit de combustion est lié à la vitesse de combustion, c'est à dire à la vitesse à laquelle l'énergie issue de l'oxydation du combustible par le comburant est libérée. L'utilisation de gaz recyclés permet d'étaler le temps de combustion et corrélativement de réduire le bruit du moteur.

Toutefois la réduction du bruit du moteur par l'utilisation de gaz recyclés peut être préjudiciable pour le rendement moteur.

C'est la raison pour laquelle de nombreux motoristes ont développé diverses solutions visant à contrôler l'adjonction de gaz recyclés et particulièrement la création de strates de gaz dans la ou les chambres de combustion.

Un moteur du type précédemment défini, permettant un tel contrôle de l'admission de gaz recyclés, est par exemple décrit dans le document brevet EP 1 243 777 de MAZDA MOTORS CORPORATION AKI-GUN.

Ce document divulgue un moteur comportant une chambres de combustion, un moyen d'admission, une sortie d'échappement et un moyen de recyclage de gaz à l'admission, les gaz brûlés recyclés étant collectés à l'échappement.
Le débit de gaz recyclés dans la chambre de combustion est contrôlé par une vanne pilotée par un calculateur.
La quantité de carburant injectée dans la chambre est contrôlée par une pompe d'injection pilotée par ce même calculateur.
Un capteur de débit d'air et un capteur de température situés à l'admission permettent de mesurer la quantité d'air admise dans la chambre.
Les mesures de débit et de température de l'air admis sont corrélées avec des informations préenregistrées d'une base de données cartographique afin de connaître les conditions d'admission. Ce procédé est utilisé pour tenir compte de variations environnementales du véhicule telles que des changements de la température de l'air ambiant ou de la pression atmosphérique qui influent sur la quantité réelle d'air admis.

Une base de données dans laquelle sont préenregistrées des états environnementaux donnés et des commandes moteur correspondantes est utilisée pour adapter les commandes du moteur à son environnement.

Ce procédé ne permet pas d'optimiser le bruit du moteur qui, notamment pour des raisons de confort doit être minimisé.

Les documents EP 1 221 544 A et EP 1 083 322 A montrent aussi des procédés de pilotage des moteurs thermiques comme dans le préambule de la revendication 1.

Dans ce contexte, la présente invention a pour but de proposer un procédé de pilotage d'un moteur thermique permettant de contrôler l'admission de gaz et la création de strates de gaz à l'intérieur de la chambre de combustion aussi appelé stratification de gaz recyclés en vue de réduire le bruit du moteur et éventuellement améliorer son rendement.

A cette fin, le procédé de pilotage d'un moteur thermique de l'invention, par ailleurs conforme à la définition générique qu'en donne le préambule ci-dessus, est essentiellement caractérisé en ce qu'il comporte en outre une étape de détermination de l'état de fonctionnement moteur consistant à mesurer au moins la charge en carburant du moteur et une étape de mesure de bruit du moteur ml(n), ces deux étapes se déroulant sur un premier intervalle de temps n, une étape de lecture de la base de données cartographique préenregistrées indiquant pour chaque état de fonctionnement déterminé un niveau de bruit maximum admissible Brc(n), le procédé comportant en outre une étape de commande de stratification consistant à créer dans la chambre de combustion et durant un second intervalle de temps (n+1) postérieur au premier, au moins deux strates de gaz ayant respectivement des taux de concentration en gaz recyclés différents de manière que le bruit mesuré du moteur Brml(n) reste ou devienne inférieur au bruit maximum admissible Brc(n).

Ce procédé selon l'invention consiste donc à mesurer ou évaluer le bruit réel du moteur Brml(n)et à le comparer avec le bruit maximum admissible Brc(n) qui est une donnée préenregistrée correspondant à un état de fonctionnement donné du moteur.

Lorsque le bruit du moteur Brml(n) est supérieur au bruit cartographié Brc(n), alors un signal de contrôle de débit est envoyé au premier moyen de contrôle de débit afin d'augmenter la différence de concentration en gaz recyclés entre les strates de la chambre. Ce but est notamment atteint par augmentation du débit de gaz recyclés dans la première veine fluide. Ce signal de contrôle de débit peut également être appelé commande de stratification car il permet de créer des strates de gaz dans la chambre de combustion. Sous l'effet de la commande de stratification, le taux de gaz recyclés dans la chambre augmente localement, créant ainsi des strates de gaz à taux de gaz recyclés différents. La combustion de la ou des strates riches en gaz recyclés est retardée par rapport aux strates à plus faibles taux de gaz recyclés permettant d'allonger la durée globale de combustion au cours d'un cycle moteur et corrélativement de réduire le bruit du moteur Brml(n).

Lorsque le bruit du moteur Brml(n) est inférieur au bruit cartographié Brc(n), alors un signal de contrôle de débit peut être envoyé au premier moyen de contrôle de débit afin de réduire la différence de concentration en gaz recyclés des strates et corrélativement augmenter la vitesse de combustion.

Cette réduction du différentiel de concentration en gaz recyclés entre deux strates peut se faire soit en réduisant la concentration en gaz recyclés de la strate qui était jusqu'alors la plus concentrée, soit en augmentant la concentration en gaz recyclés de la strate qui avait jusqu'alors la plus faible concentration et éventuellement en effectuant ces deux opérations simultanément.

Dans le cas où il est souhaitable de réduire le taux de concentration en gaz recyclés de la strate qui avait jusqu'alors la plus forte concentration, il est possible d'emmètre un nouveau signal de contrôle de débit pour réduire ou stopper le débit de gaz recyclés dans la première veine fluide.

Il est également possible d'atteindre ce même but en augmentant la concentration en gaz recyclé dans les strates qui avaient jusqu'alors la concentration la plus faible.

Selon un exemple particulier de réalisation de l'invention, les étapes de détermination de l'état de fonctionnement du moteur, de mesure de bruit de moteur sont réalisées sur un intervalle de temps révolu de plusieurs cycles moteur de manière à ce que le signal de contrôle de débit corresponde à une mesure moyenne de bruits moteur ainsi qu'à une détermination d'un état moyen de fonctionnement moteur.

Ce mode de réalisation permet de lisser la mesure et ainsi de réduire l'impact de résultats de mesures discrètes isolées ou incohérentes.

Selon un autre exemple particulier de réalisation de l'invention, le premier signal de contrôle de débit émis lors de l'étape de commande de stratification a une valeur moyenne fixe tout au long du second intervalle de temps.
Ainsi, lorsque le second intervalle de temps est de plusieurs cycles moteur, la commande de stratification est lissée sur plusieurs cycles, ce qui permet notamment de tenir compte du délai de réponse du moteur à un changement de valeur du premier signal.

D'autres caractéristiques et avantages de l'invention ressortiront clairement de la description qui en est faite ci-après, à titre indicatif et nullement limitatif, en référence aux dessins annexés, dans lesquels:
la figure 1 représente le procédé d'optimisation de la stratification de gaz recyclé admis dans une chambre de combustion ;
la figure 2 représente un moteur à combustion possédant des moyens de contrôle de débit de gaz recyclés pour chaque chambre de combustion ;
la figure 3 représente un moteur à combustion possédant des moyens de contrôle de débit de gaz recyclés communs à plusieurs chambres de combustion.

Comme annoncé précédemment, l'invention concerne un procédé de pilotage d'un moteur thermique à fonctionnement cyclique tel qu'un moteur diesel à injection directe.

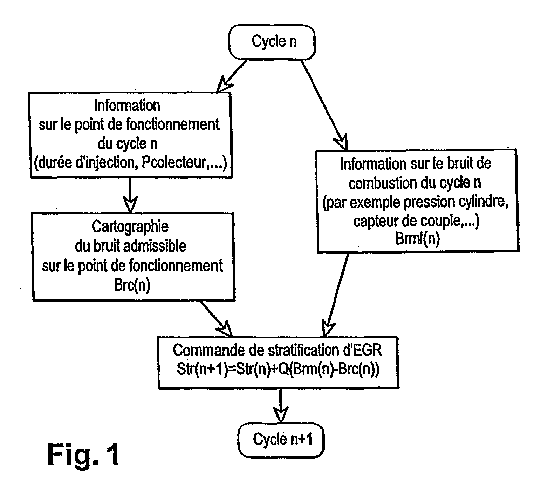

La figure 1 représente un exemple de réalisation du procédé selon l'invention.

La figure 1 représente le procédé de l'invention destiné à maintenir le bruit du moteur en dessous d'un seuil maximum de bruit admissible.

Ce procédé consiste à contrôler le bruit du moteur par une fonction dite de stratification ou de création de strates de fluides à taux de gaz recyclés variables d'une strate à l'autre.

Dans ce mode de réalisation particulier, la chambre de combustion est alimentée par au moins deux veines fluides ayant chacune un taux de gaz recyclés régulé par les moyens de contrôle de débit.
Ces deux veines fluides alimentent une chambre de combustion et forment ainsi des strates de fluides contenant de l'air et des proportions de gaz recyclés variables. Préférentiellement, le taux de gaz recyclés d'une strate est fonction de son taux de charge en carburant.

Chaque strate de fluide ainsi créée possède son propre taux de gaz recyclés, et donc son propre délai d'allumage et sa propre vitesse de combustion ce qui permet d'étaler le temps de la combustion dans l'ensemble de la chambre.
Corrélativement la régulation des taux de gaz recyclés de chaque strate et du différentiel de taux de gaz recyclés entre les strates permet le pilotage de la vitesse de combustion et la réduction du bruit de combustion. On peut par exemple contrôler la vitesse de combustion en faisant varier l'écart entre les deux valeurs des taux de gaz recyclés de chacune des deux veines fluides.

Plus précisément, le procédé de contrôle en boucle fermée de la figure 1 consiste en une première étape au cycle n de mesure du bruit Brm(n) émis par le moteur.
La mesure du bruit du moteur peut se faire par toute technique permettant de détecter la vitesse de combustion dans la chambre. Pour se faire on peut détecter l'intervalle de temps où la pression à l'intérieur de la chambre monte brusquement. Cette mesure peut être notamment effectuée à l'aide d'un capteur du couple transmis par le vilebrequin, à l'aide d'un capteur de pression à l'intérieur de la chambre en dérivant les signaux mesurés. Cette mesure peut également être effectuée à l'aide d'un accéléromètre placé sur la culasse.ou le vilebrequin en recherchant la valeur maximale de l'accélération.

Une seconde étape de collecte d'informations sur le point de fonctionnement du moteur est réalisée durant le même intervalle de temps que l'étape de mesure de bruit Brm(n). Le point de fonctionnement correspond principalement à la quantité de carburant injectée pour un régime moteur donné. D'autres informations sur le point de fonctionnement du moteur au cycle n peuvent également être collectées afin de déterminer un état du moteur.
La quantité de carburant consommée est mesurée de façon directe avec un débitmètre et/ou de façon indirecte à l'aide de la durée de commande de l'injecteur et de la pression du carburant injecté. La quantité de carburant calculée par mesure indirecte peut être corrigée en fonction de la température du carburant et/ou de la pression à l'intérieur de la chambre.

Une base de données cartographique sert de référence pour indiquer quel est le bruit moteur maximum admissible cartographié Brc(n) correspondant à un état du moteur mesuré au cycle n.
Le calculateur compare alors le bruit maximum admissible Brc(n) pour le point de fonctionnement moteur au cycle n avec le bruit moteur mesuré Brm(n) pour ce même cycle n.

Comme évoqué précédemment, si le bruit moteur mesuré Brm(n) est supérieur au bruit moteur maximum admissible cartographié Brc(n), alors le calculateur augmente la nouvelle valeur de commande de stratification Str (n+1) pour le cycle à venir n+1 par rapport à la valeur de la commande de stratification Str (n) du cycle n. L'augmentation de la valeur de la commande de stratification permet de créer des strates de gaz ayant des taux de concentration en gaz recyclés différents et corrélativement des vitesses de combustion différentes. La combustion est donc étalée dans le temps ce qui permet de réduire le bruit du moteur.

Si le bruit mesuré Brm(n) est inférieur au bruit moteur maximum admissible cartographié Brc(n), alors le calculateur réduit la nouvelle valeur de commande de stratification Str (n+1) pour le cycle à venir (n+1) par rapport à la valeur de la commande de stratification Str (n) du cycle n. La réduction de la valeur de la commande de stratification Str (n+1) permet de réduire la différence de concentration en gaz recyclés entre les strates de la chambre et corrélativement augmenter la vitesse de combustion.

Ce procédé de contrôle du bruit peut alors être répété pour des cycles moteurs ultérieurs.

L'intervalle de temps de mesure correspond préférentiellement à un nombre entier de cycles moteurs et la mesure est préférentiellement moyennée sur plusieurs cycles moteur afin lisser les résultats des mesures.

La commande de stratification de ce procédé peut être fondée sur un seul cycle n, ou sur une moyenne de plusieurs cycles.

La commande de stratification Str (n+1) ou premier signal de contrôle de débit de gaz recyclés peut également être corrigée à l'aide d'une fonction de correction Q cartographiée. Préférentiellement, cette fonction de correction Q prend en compte la sensibilité et le temps de réponse du moteur au signal de stratification visant à réduire le bruit du moteur.
La commande peut s'appliquer au cycle immédiatement successif à la mesure ou aux mesures, ou être retardée de plusieurs cycles. Elle peut également s'appliquer chambre à chambre ou sur un ensemble de chambres.

La fonction de stratification peut être une fonction tout ou rien ou être une fonction variable continue proportionnellement à l'écart entre le bruit mesuré Brm(n) et le bruit cartographié Brc(n).

Dans certains cas, le débit de gaz recyclés dans la chambre peut également être un paramètre géré par un second procédé de commande tel qu' un procédé de gestion du taux global de gaz recyclés dans la chambre. Dans ce cas les procédés peuvent donner des ordres de commandes du paramètre débit de gaz contradictoires entre eux. Ainsi pour éviter un risque de conflit entre les commandes, il est prévu que l'un des procédés prenne le pas sur l'autre selon que l'on cherche à privilégier l'un ou l'autre de ces procédés.

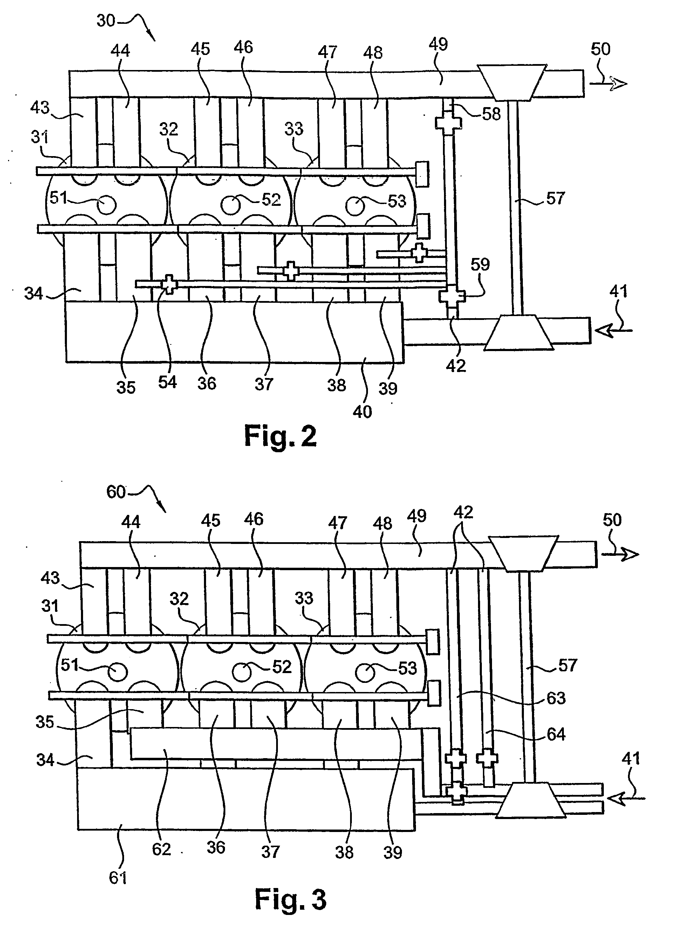

Les figures 2 et 3 représentent respectivement deux exemples de moteurs 30 et 60 dotés de circuits de contrôle du recyclage de gaz brûlés pour la mise en oeuvre du procédé précédemment décrit. Chacun de ces moteurs 30, 60 possède trois cylindres ou chambres de combustion 31, 32, 33. Chaque chambre 31, 32, 33 comporte un injecteur de carburant 51, 52, 53 ainsi que deux entrées d'admission respectivement 34 à 39, séparées l'une de l'autre pour introduire dans chaque chambre deux veines fluides séparées. Chaque veine fluide peut comporter une proportion variable dans le temps de gaz brûlés recyclés de manière à former des strates de gaz dans la chambre.

Les première, deuxième et troisième chambres de combustion 31, 32, 33 possèdent chacune des première et seconde sorties d'échappement de gaz brûlés 50 respectivement 43 à 48.
L'ensemble de ces sorties d'échappement 43 à 48 sont connectées à une sortie principale d'échappement 49.
Chacun des moteurs 30, 60 des figures 2 et 3 est doté d'un turbo 57 et d'un moyen de recyclage permettant de collecter une partie des gaz d'échappement 50 pour les introduire au niveau de l'admission.

Les entrées d'admission 34 à 39 du moteur 30 de la figure 2 sont connectées à une admission principale 40 pour l'admission d'air 41 et de gaz brûlés recyclés 42.

L'admission principale 40 est elle-même reliée à la sortie principale d'échappement 49 par l'intermédiaire d'un moyen de recyclage 58 de gaz brûlés 42.
Le moyen de recyclage 30 comporte une vanne de contrôle 59 du taux de gaz brûlés recyclés dans l'admission principale 40. Cette vanne 59 permet donc de contrôler le débit de gaz brûlés pour l'ensemble des entrées d'admission 34 à 39 et des chambres de combustion 31 à 33 et cela par un seul moyen de contrôle de débit.
Des première, deuxième et troisième vannes de stratification 54 à 56 relient respectivement le moyen de recyclage 58 de gaz brûlés aux secondes entrées d'admission 35, 37, et 39.
Chacune de ces trois vannes de stratification 54 à 56 contrôle individuellement la stratification de chacune des chambres respectives 31 à 33.

Par exemple, la première vanne de stratification 54 permet l'admission de gaz recyclés dans la veine fluide transitant par la deuxième entrée d'admission. La veine fluide transitant par la seconde entrée 35 a donc un taux de gaz recyclé variable et contrôlé par la première vanne de contrôle de stratification 54 et/ou par la vanne de contrôle de taux 59.

La veine fluide transitant par la première entrée 34 a un taux de gaz recyclé variable qui est uniquement contrôlé par la vanne de contrôle de taux 59.
Le différentiel de concentration en gaz recyclés dans la première chambre 31 peut donc être ajusté en jouant sur la première vanne de stratification 54.

Le moteur 60 de la figure 3 permet le contrôle simultané et centralisé pour l'ensemble des chambres du débit de gaz recyclés ainsi que leurs stratifications.

Le moteur 60 de cette figure comporte des première et seconde entrées principales d'admission 61 et 62.
Les première et secondes entrées principales d'admission 61 et 62 sont reliées à la sortie principale d'échappement 49 par l'intermédiaire d'un premier moyen de recyclage 63 pour la première entrée principale 61 et d'un second moyen de recyclage 64 pour la seconde entrée principale 62.

La première entrée principale 61 est reliée aux premières entrées d'admission 34, 36, 38 permettant ainsi l'admission de premières veines fluides ayant le même taux de concentration en gaz recyclés.

La seconde entrée principale 62 est reliée aux secondes entrées d'admission 35, 37, 39 permettant ainsi l'admission de secondes veines fluides ayant le même taux de concentration en gaz recyclés.

Les débits respectifs en gaz recyclés des première et seconde entrées principales d'admission 61 et 62 sont indépendamment et respectivement contrôlés par des première et seconde vannes 65 et 66.

Ce montage particulier permet de contrôler le taux de gaz recyclé dans toutes les chambres par deux vannes.
Ces deux vannes permettent également le contrôle de la stratification en jouant sur le différentiel de débit en gaz recyclé 42 passant par les premier et second moyens de recyclage 63 et 64.

De la même manière que pour le moteur 30 de la figure 2, les moyens de contrôle de débit des gaz d'échappement recyclés sont constitués de vannes commandées par au moins un moyen de commande pneumatique, hydraulique ou électrique. Ces vannes peuvent délivrer un débit de gaz continu ou discontinu.

## Revendications

1. Procédé de pilotage d'un moteur thermique à fonctionnement cyclique (30) tel qu'un moteur diesel à injection directe, comprenant notamment
une chambre de combustion (31),
des moyens d'injection de carburant (51) dans la chambre,
des moyens d'admission (34, 35) pour admettre sélectivement dans la chambre un comburant gazeux contenant de l'air (41) sous la forme d'une première veine fluide,
des moyens d'échappement (43, 44) pour autoriser sélectivement l'échappement de gaz brûlés (50) hors de la chambre (31) et
des moyens de recyclage (58) incluant
un premier moyen de contrôle de débit (59, 60) pour recycler des gaz brûlés (42) dans la première veine fluide selon un premier taux de concentration en gaz brûlés, ce premier moyen de contrôle de débit étant pilotés par un premier signal de contrôle de débit,
une base de données cartographique,
le procédé étant **caractérisé en ce qu'**il comporte en outre une étape de détermination de l'état de fonctionnement moteur consistant à mesurer au moins la charge en carburant du moteur et une étape de mesure de bruit du moteur Brml(n), ces deux étapes se déroulant sur un premier intervalle de temps (n), une étape de lecture de la base de données cartographique préenregistrées indiquant pour chaque état de fonctionnement déterminé un niveau de bruit maximum admissible Brc(n), le procédé comportant en outre une étape de commande de stratification consistant à créer dans la chambre de combustion et durant un second intervalle de temps (n+1) postérieur au premier, au moins deux strates de gaz ayant respectivement des taux de concentration en gaz recyclés différents de manière que le bruit mesuré du moteur Brml(n) reste ou devienne inférieur au bruit maximum admissible Brc(n).

2. Procédé selon la revendication précédente **caractérisé en ce que** les étapes de détermination de l'état de fonctionnement du moteur, de mesure de bruit de moteur sont réalisées sur un intervalle de temps de plusieurs cycles moteur de manière à ce que le signal de contrôle de débit corresponde à une mesure moyenne de bruits moteur ainsi qu'à une détermination d'un état moyen de fonctionnement moteur.

3. Procédé selon l'une quelconque des revendications précédentes **caractérisé en ce que** le premier signal de contrôle de débit émis lors de l'étape de commande de stratification a une valeur moyenne fixe tout au long du second intervalle de temps.

4. Procédé selon l'une quelconque des revendications précédentes **caractérisé en ce que** les moyens d'admission comportent des première et seconde entrées d'admission de comburant gazeux dans la chambre, permettant l'admission respective dans la chambre d'une première et d'une seconde veine fluide de comburants gazeux.

5. Procédé selon l'une quelconque des revendications précédentes **caractérisé en ce que** le moyen de recyclage (58) comporte un second moyen de contrôle de débit (54) de gaz recyclés de manière à admettre dans la chambre (31) une seconde veine fluide ayant un second taux de gaz recyclés variable et contrôlé.

6. Procédé selon l'une quelconque des revendications précédentes **caractérisé en ce que** chaque cycle du moteur comporte une phase d'admission au cours de laquelle le débit de gaz recyclés admis est variable de manière à former plusieurs strates de gaz comburant ayant chacune un taux de concentration en gaz recyclés variable dans le temps.

7. Procédé selon l'une quelconque des revendications précédentes **caractérisé en ce que** la mesure de la charge du moteur en carburant est réalisée par un débitmètre ou un moyen de mesure de la durée d'injection de carburant.

8. Procédé selon l'une quelconque des revendications précédentes **caractérisé en ce que** le moteur comporte des moyens de mesure du bruit qui peuvent être un capteur de pression de gaz dans la chambre et/ou un capteur de couple du moteur et/ou un accéléromètre.

9. Procédé selon l'une quelconque des revendications précédentes **caractérisé en ce que** les moyens de recyclage comportent des vannes commandées par au moins un moyen de commande pneumatique, hydraulique ou électrique.

10. Procédé selon l'une quelconque des revendications précédentes **caractérisé en ce que** le premier signal de contrôle de débit est une fonction variable de l'écart entre le bruit mesuré Brm(n) et le bruit cartographié Brc (n)

## Claims

1. Method of controlling a cyclically operating heat engine (30) such as a direct injection diesel engine, comprising in particular
a combustion chamber (31),
means (51) for injecting fuel into the chamber,
induction means (34, 35) for the selective induction into the chamber of an oxidizing gas containing air (41) in the form of a first fluid stream,
exhaust means (43, 44) for selectively allowing the exhaustion of burned gases (50) from the chamber (31) and
recirculating means (58) incorporating
a first flow rate control means (59, 60) for recirculating burnt gases (42) into the first fluid stream at a first concentration of burnt gases, this first flowrate control means being controlled by a first flowrate control signal, and
a map database,
the method being **characterized in that** it also comprises a step of identifying the engine operating condition consisting in measuring at least the fuel charge of the engine and a step of measuring the engine noise Brml(n), these two steps taking place over a first time interval (n), and a step of reading the prerecorded map database indicating for each identified operating condition a maximum admissible noise level Brc(n), the method also comprising a stratify command step consisting in creating in the combustion chamber, during a second time interval (n+1) subsequent to the first, at least two gas strata that each have different levels of concentration of recirculated gases so that the measured engine noise Brml(n) remains or becomes less than the maximum admissible noise Brc(n).

2. Method according to the preceding claim, **characterized in that** the steps of identifying the engine operating condition and measuring engine noise are performed over a time interval of several engine cycles so that the flowrate control signal corresponds to an average engine noise measurement and to an identification of an average engine operating condition.

3. Method according to any one of the preceding claims, **characterized in that** the first flowrate control signal emitted during the stratify command step has a fixed average value throughout the second time interval.

4. Method according to any one of the preceding claims, **characterized in that** the induction means comprise first and second inlets for induction of oxidizing gas into the chamber, enabling individual induction of a first and a second fluid stream of oxidizing gases into the chamber.

5. Method according to any one of the preceding claims, **characterized in that** the recirculating means (58) comprises a second recirculated gas flowrate control means (54) so as to induct into the chamber (31) a second fluid stream having a variable and controlled second concentration of recirculated gases.

6. Method according to any one of the preceding claims, **characterized in that** each engine cycle comprises an induction phase during which the flowrate of inducted recirculated gases is variable so as to form several strata of gaseous oxidant, each having a concentration of recirculated gases that varies over time.

7. Method according to any one of the preceding claims, **characterized in that** the fuel charge of the engine is measured by a flow meter or by a means of measuring the fuel injection duration.

8. Method according to any one of the preceding claims, **characterized in that** the engine comprises noise measurement means that may be a sensor of the gas pressure in the chamber and/or a sensor of the engine torque and/or an accelerometer.

9. Method according to any one of the preceding claims, **characterized in that** the recirculating means comprise valves controlled by at least one pneumatic, hydraulic or electrical actuating means.

10. Method according to any one of the preceding claims, **characterized in that** the first flowrate control signal is a variable function of the difference between the measured noise Brm(n) and the mapped noise Brc(n).

## Patentansprüche

1. Verfahren zum Steuern eines Verbrennungsmotors mit zyklischem Betrieb (30), wie zum Beispiel eines Dieselmotors mit Direkteinspritzung, der insbesondere Folgendes aufweist:
eine Brennkammer (31),
Mittel zum Einspritzen von Kraftstoff (51) in die Kammer,
Einlassmittel (34, 35), um in die Kammer selektiv einen gasförmigen Sauerstoffträger einzulassen, der Luft (41) enthält, in Form einer ersten Fluidzunge,
Auslassmittel (43, 44), um selektiv das Austreten verbrannter Gase (50) aus der Kammer (31) zu gestatten und
Rückführmittel (58), die Folgendes aufweisen:
ein erstes Mittel zum Durchflusssteuern (59, 60) um verbrannte Gase (42) in der ersten Fluidzunge gemäß einer ersten Konzentrationsrate an verbrannten Gasen zurückzuführen, wobei dieses erste Durchflusssteuermittel von einem ersten Durchflusssteuersignal gesteuert wird,
eine kartografische Datenbank,
wobei das Verfahren **dadurch gekennzeichnet ist, dass** es ferner einen Schritt des Bestimmens des Betriebszustands des Motors aufweist, der darin besteht, mindestens die Kraftstofflast des Motors zu messen, und einen Schritt des Messens des Motorgeräuschs Brml(n), wobei diese zwei Schritte über eine erste Zeitspanne (n) ablaufen, einen Schritt des Lesens der vorgespeicherten kartografischen Datenbank, die für jeden bestimmten Betriebszustand einen maximalen zulässigen Geräuschpegel Brc(n) angibt, wobei das Verfahren ferner einen Schritt des Schichtungssteuerns aufweist, der darin besteht, in der Brennkammer und während einer zweiten Zeitspanne (n+1) nach der ersten mindestens zwei Schichten Gas zu schaffen, die jeweils unterschiedliche Konzentrationsraten an zurückgeführten Gasen haben, so dass das gemessene Motorgeräusch Brml(n) geringer als das maximal zulässige Geräusch Brc(n) bleibt oder wird.

2. Verfahren nach dem vorhergehenden Anspruch, **dadurch gekennzeichnet, dass** die Schritte des Bestimmens des Betriebszustands des Motors, des Messens des Motorgeräuschs über eine Zeitspanne mehrerer Motorzyklen ausgeführt werden, so dass das Durchflusssteuersignal einer mittleren Messung von Motorgeräuschen sowie einem Bestimmen eines mittleren Motorbetriebszustands entspricht.

3. Verfahren nach einem der vorhergehenden Ansprüche, **dadurch gekennzeichnet, dass** das erste Durchflusssteuersignal, das bei dem Schritt des Schichtungssteuerns gesendet wird, während der ganzen zweiten Zeitspanne einen gleich bleibenden mittleren Wert hat.

4. Verfahren nach einem der vorhergehenden Ansprüche, **dadurch gekennzeichnet, dass** die Einlassmittel erste und zweite Einlasseingänge für gasförmigen Sauerstoffträger in die Kammer aufweisen, die das jeweilige Einlassen in die Kammer einer ersten und einer zweiten Fluidzunge aus gasförmigen Sauerstoffträgern gestatten.

5. Verfahren nach einem der vorhergehenden Ansprüche, **dadurch gekennzeichnet, dass** das Rückführmittel (58) ein zweites Durchflusssteuermittel (54) für rückgeführte Gase aufweist, so dass in die Kammer (31) eine zweite Fluidzunge eingelassen wird, die eine zweite variable und kontrollierte Rate an rückgeführten Gasen hat.

6. Verfahren nach einem der vorhergehenden Ansprüche, **dadurch gekennzeichnet, dass** jeder Zyklus des Motors eine Einlassphase aufweist, während welcher der Durchfluss an eingelassenen zurückgeführten Gasen so variabel ist, dass mehrere Sauerstoffträgergasschichten gebildet werden, die jeweils eine zeitlich variable Konzentrationsrate an rückgeführten Gasen haben.

7. Verfahren nach einem der vorhergehenden Ansprüche, **dadurch gekennzeichnet, dass** das Messen der Motorlast an Kraftstoff von einem Durchflussmesser oder einem Mittel zum Messen der Kraftstoffeinspritzdauer ausgeführt wird.

8. Verfahren nach einem der vorhergehenden Ansprüche, **dadurch gekennzeichnet, dass** der Motor Mittel zum Messen des Geräuschs aufweist, die ein Gasdrucksensor in der Kammer und/oder ein Sensor des Motordrehmoments und/oder ein Beschleunigungsmesser sein können.

9. Verfahren nach einem der vorhergehenden Ansprüche, **dadurch gekennzeichnet, dass** die Rückführmittel Schieber aufweisen, die von mindestens einem pneumatischen, hydraulischen oder elektrischen Steuermittel gesteuert werden.

10. Verfahren nach einem der vorhergehenden Ansprüche, **dadurch gekennzeichnet, dass** das erste Durchflusssteuersignal eine variable Funktion des Unterschieds zwischen dem gemessenen Geräusch Brm(n) und dem kartografierten Geräusch Brc(n) ist.
